# EUROPEAN PATENT SPECIFICATION

(11) **EP 3 093 138 B1**
(45) Date of publication and mention of the grant of the patent: **11.11.2026**
(21) Application number: 15167689.7
(22) Date of filing: 13.05.2015
(51) Int. Cl.: B32B 15/085, B32B 15/12, B32B 15/20, B32B 27/10, B32B 27/32, B65D 85/10

(54) **Inner liner for a package for tobacco and/or smoking related articles with reverse printing on printable foil**
Innenauskleidung für eine verpackung für tabak und/oder rauchverwandte artikel mit widerdruck auf bedruckbare folie
Revêtement interne pour un emballage pour du tabac et/ou articles à fumer avec une impression inverse sur une feuille imprimable

(43) Date of publication of application: 16.11.2016
(73) Proprietor: Reemtsma Cigarettenfabriken GmbH, 22763 Hamburg (DE)
(72) Inventor: Kristen, Benjamin, 22761 Hamburg (DE); Gerding-Reimers, Claas, 22761 Hamburg (DE)
(74) Representative: Gulde & Partner

(56) References cited:
- EP-A1- 1 803 662
- EP-A2- 0 317 818
- CN-A- 102 424 206
- CN-U- 203 450 574
- GB-A- 1 471 086
- US-A- 3 237 843
- US-A- 4 729 909
- US-A- 5 542 529

## Description

### FIELD OF INVENTION

The present invention relates to an inner liner for a package for tobacco and/or smoking related articles and a package comprising the inner liner.

### BACKGROUND

Packages for tobacco related articles, such as cigarette packages usually comprise a package body and an inner liner that is arranged between the inner walls of the body and the articles. Exemplary embodiments of such packages of the prior art are disclosed in EP 0 317 818 A2. The inner liner usually encompasses the articles entirely. It mainly serves to preserve flavor and humidity of the tobacco related articles and protects the articles from being affected by outer conditions etc. One of the major drawbacks of existing inner liners is an effect that is referred to as "bleeding". This means that any printing that is applied to the inner liner can leave stripes or stains on the cigarettes if a cutting edge of the inner liner contacts the cigarettes.

Further exemplary embodiments of cigarette packages of the prior art are disclosed in US 3,237,843A, CN203450574U and GB 1 471 086 A.

### SUMMARY

The present invention is directed to subject matter as defined in the claims.

According to an aspect of the invention an inner liner is provided which is configured to be arranged between a package body and articles, in particular smoking and/or tobacco related articles. The inner liner consists of a first, a second and a third layer.

The first layer consists of a material that substantially shows plastic deformation and the second layer consists of a material that substantially shows elastic deformation.

The second layer is an outermost layer. The first layer is an innermost layer.

The second layer can consist of a printable foil. The inner liner can then comprise a reverse printing on the printable foil. This means that a printing is provided on the second layer that faces the respective other layer. This aspect prevents "bleeding" of the printing. The reverse printing and the printable foil are arranged such that the reverse printing is visible by the naked human eye through the printable foil. The printable foil is at least partially transparent. The printable foil can have at least a light transmission of 50 %.

Providing reverse printings on the printable foils also provides more space for information, warnings or advertisement on the inside and/or outside of the inner liner.

The inner liner consists of a first layer, a second layer and a third layer. The third layer is arranged between the first layer and the second layer.

The first layer is an inner layer, the third layer is a middle layer and the second layer is an outer layer. The inner layer can be configured and/or arranged such that it encompasses at least partially the articles. The outer layer can be configured and/or arranged to face the outer body of the package. The outer layer is the outermost layer. The middle layer is arranged between the inner layer and the outer layer.

The inner layer consists of a material that substantially shows plastic deformation. The middle layer can consist of a material that substantially shows plastic deformation. The outer layer consists of a material that substantially shows elastic deformation.

In all aspects and/or embodiments, the printable foils can, for example consist of polyethylene (PE) or oriented polypropylene (OPP) or biaxial OPP (B-OPP).

In the inner liner of the present invention, a third layer is arranged between the first layer and second layer. The second layer may then be printable foil. The outer layer carries a reverse printing. The third layer may be made of metal (for example Aluminum) or paper. The third layer (plastic deformation) is then configured to compensate the resilient forces of the first and the second layer (elastic deformation).

According to another aspect, a package for tobacco and/or smoking related articles is provided, comprising a package body and an inner liner according to the aspects and embodiments described herein.

The terms "shows elastic deformation" and "shows plastic deformation" mean that the respective material substantially behaves according to plastic or elastic deformation. In materials science, deformation refers to any changes in the shape or size of an object due to an applied force or a changing temperature. In the context of this specification, the deformation relates to an applied force, in particular forces for bending or folding the inner liner. The term "elastic deformation" refers to a type of deformation that is reversible. Once the forces are no longer applied, the object returns to its original shape. This is due to inherent forces of the material. Plastic deformation is a type of deformation that remains when the forces are no longer applied. An object in the plastic deformation range may also first undergo elastic deformation which is reversible, so the object can return part way to its original shape. In the context of this specification paper and metal are examples for plastic deformation. While foils of polymers such as polyethylene (PE) or oriented polypropylene (OPP) or biaxial OPP (B-OPP) are examples for elastic deformation. The present invention combines properties of different materials having elastic deformation and plastic deformation in a manner that allows providing an inner liner that in total mainly shows plastic deformation. Plastic deformation mainly relates to the fact that the inner liner can be folded and remains in the folded configuration. In other words, the elastic deformation of the outer layer (foil) is compensated or overcompensated by the inner layer and the middle layer.

At least one out of the first and third layer (for example the inner layer or the middle layer) can comprise or consist of metal. The metal is preferably aluminum (Al). The other layer that is not made of metal can be made of paper. The second layer (for example an outer layer) can be made of a printable foil of any polymer or plastic material.

Furthermore, the inner liner comprises a reverse printing. The reverse printing is generally applied to the side of the printable foil (for example second layer) that faces the respective other layer. This is implied by the term "reverse printing".

The reverse printing is applied to the side of the outer layer facing the middle layer. Applying the printing on a foil (outer layer) provides that the printing is generally more resistant against bleeding effects. However, it is still more advantageous to apply the printing on the reverse (inner) side of the (outer) layer (the foil).

In an aspect, the color of the reverse printing is at least partially dark. It is a particular advantage of this aspect that dark colors can be applied to an inner liner. However, it is generally possible to use any color that is different from the color of the articles or the inner side of the package. This serves to avoid stripes or other trace of the printing on the articles or inner side of the package.

The metal layers may generally have a weight of 4 g to 12 g per square meter.

The printable foils (PE, OPP, B-OPP) may generally have thickness of 6 µm to 20 µm (for example, first and/or second layer).

The paper layers may generally have a weight of 20 g to 70 g per square meter in particular, if they are used together with a metal layer.

In an embodiment, the first layer may consist of metal (for example aluminum) and the second layer can consist of a printable foil, for example of polyethylene (PE) or oriented polypropylene (OPP) or biaxial OPP (B-OPP). The first layer may then have a weight of 4 g to 12 g per square meter and the second layer may have a thickness of 6 µm to 20 µm.

In another embodiment, the first layer may consist of paper and the second layer can consist of a printable foil, for example of polyethylene (PE) or oriented polypropylene (OPP) or biaxial OPP (B-OPP). The first layer may then have a weight of 20 g to 70 g per square meter and the second layer may have a thickness of 6 µm to 20 µm.

In an embodiment, the inner layer can consist of metal (for example aluminum), the middle layer can consist of paper and the outer layer can consists of a printable foil, for example of polyethylene (PE) or oriented polypropylene (OPP) or biaxial OPP (B-OPP). In this configuration, the inner layer can have a weight of 4 g to 12 g per square meter. The middle layer can have a weight of 20 g to 70 g per square meter. Although it is also possible to only use a metal layer for compensating the resilient forces (elastic deformation) of the outer layer (foil), it is advantageous to use a combination of metal and paper for the inner layer and the middle layer. Since production costs for paper are lower than those for metal, using paper in addition to metal helps to reduce costs. The metal layer (e.g. Al) serves as a barrier for humidity and/or flavor.

In another embodiment, the inner layer can consist of paper, the middle layer can consists of metal and the outer layer can consist of a foil of polyethylene (PE) or oriented polypropylene (OPP) or B-OPP. In this configuration, the inner layer can have a weight of 20 g to 70 g per square meter. The middle layer can have a weight of 4 g to 12 g per square meter. The outer layer can have a thickness of 6 µm to 20 µm.

In an aspect, the inner liner can comprise a removable pull-off flap. The reverse flap forms an integral part of the inner liner. The pull-off flap is made from the same blank as the inner liner. The pull-off flap is made of the same layers and materials as described herein for the inner liner. At least one reverse printing (on a printable foil) can then be provided on the inner layer (or innermost layer) of the pull-off flap.

Another reverse printing may be provided on the outer layer (or outermost layer) of the pull-off flap. The reverse printings can be used for information, advertising, coupons, vouchers and others.

The pull-off flap can be made separable from the inner liner at a weakening line extending transversely to the length (bottom wall to top wall) of the inner liner. The weakening line can advantageously be closer to the bottom wall of the inner liner than to the top wall of the inner liner in the ready-folded state (surrounding the articles) of the inner liner.

It is also disclosed a blank for an inner liner in accordance with the aspects and embodiments described herein.

It is further disclosed a method of manufacturing an inner liner. The method comprises the steps of providing a reverse printing on a foil that serves as the outer layer. The printable foil serves as the outermost layer. In a further step, the foil is combined with an inner layer and a middle layer. The different layers may be laminated together.

According to the invention, an inner liner for a package for tobacco related and/or smoking related articles is provided comprising a first layer and a second layer. The first layer is an inner layer and the second layer is an outer layer. There is a third layer between the first layer and the second layer. The second layer is a printable foil. The third layer is made of paper or metal (for example Aluminum). According to these aspects, the resilient forces and elastic behavior of the printable foil are compensated by at least one layer of metal (for example Aluminum) or paper. Providing a paper layer or a metal layer as the third layer reduces costs, provides a barrier for humidity, vapor, flavor etc. and compensates the elastic resilient forces of the printable foil if the inner liner is folded or bent. A reverse printing is then provided on the printable foil of the second layer. This assists in preventing the inner liner from "bleeding".

According to the aspects and embodiments described herein, the inner and outer surfaces of the inner liner are available for communication with the customer. However, since a reverse printing is used, there is no direct contact between the reverse print and the product, the inside of the package or the customer. This means that there is no significant chemical reaction between the inner liner and the articles (tobacco, cigarettes etc.).

Other systems, methods, features and advantages of the embodiments will be, or will become, apparent to one of ordinary skill in the art upon examination of the following figures and detailed description. It is intended that all such additional systems, methods, features and advantages be included within this description and this summary, be within the scope of the embodiments, and be protected by the claims.

### BRIEF DESCRIPTION OF DRAWINGS

Further aspects and characteristics of the invention will ensue from the following description of preferred embodiments of the invention with reference to the accompanying drawings, wherein
FIG. 1 is a simplified cross-sectional view of an inner liner according to an embodiment,
FIG. 2 is a simplified cross-sectional view of an inner liner according to an embodiment not according to the claimed invention,
FIG. 3 is a simplified cross-sectional view of an inner liner according to an embodiment not according to the claimed invention,
FIG. 4 is a simplified perspective view on a package according to an embodiment, and
FIG. 5 is a simplified perspective view on a folded inner liner.

### DETAILED DESCRIPTION OF EMBODIMENTS

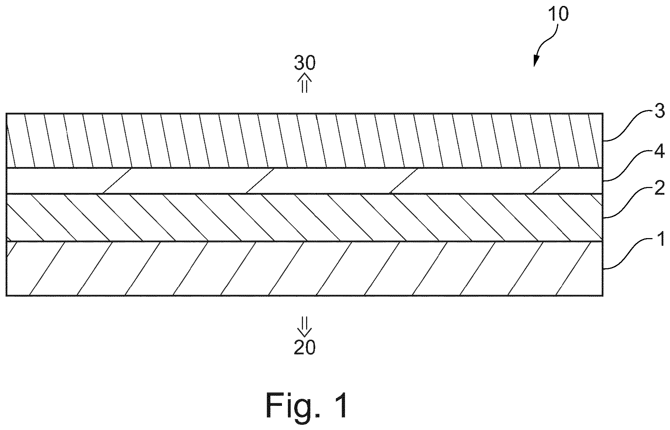

FIG. 1 shows a cross section trough the three layers 1, 2, and 3 of the material of an example of an inner liner 10. In a package (not shown) the inner layer 1 faces with one side the articles 20. With the opposite side, the inner layer 1 faces the middle layer 2. One side of the middle layer 2 faces the inner layer 1. The opposite side of the middle layer 2 faces the outer layer 3. The outer layer 3 faces with one side the middle layer 2 while the opposite side faces, for example the body of a (cigarette) package. Reference number 30 generally refers to the outside. According to this embodiment, there is a reverse printing 4 which is applied to the outer layer 3. In particular, the reverse printing 4 is applied to the inner side of the outer layer 3, which is the side facing the middle layer 2. The reverse printing 4 is not regarded a separate layer but merely a part of the outer layer 3.

For the reverse printing 4, an intaglio printing can be used.

In an embodiment, the inner layer 1 can consist of metal, advantageously aluminum (Al) The middle layer 2 can consist of paper and the outer layer 3 can consist of a foil. The foil may be polyethylene (PE) or oriented polypropylene (OPP) or B-OPP. It is particularly advantageous to use a foil for the outer layer 3 instead of, for example lacquer. Using a foil simplifies and improves applying the printing on the outer layer. The color of the reverse printing can be substantially different from the color of the articles 20 contained in the inner liner. If for example, an article 20 contained in the inner liner 10 has a bright color, the reverse printing 4 can have a dark or substantially darker color than the articles 20. The inner layer 1, which is made of metal in this embodiment, can have a weight of 4 g to 12 g per square meter. The middle layer 2, which is made of paper in this embodiment, can have a weight of 20 g to 70 g per square meter.

The outer layer 3, which is a foil, for example made of polyethylene (PE) or oriented polypropylene (OPP) can have a thickness of 6 µm to 20 µm.

In another embodiment, the inner layer 1 can consist of paper. The middle layer 2 can consist of metal and the outer layer 3 can consist of a foil of polyethylene (PE) or oriented polypropylene (OPP) or B-OPP. In this embodiment, the middle layer 2 (metal) can have weight of 4 g to 12 g per square meter. The inner layer (paper) can then have a weight of 20 g to 70 g per square meter. The outer layer 3 can have a thickness of 6 µm to 20 µm. The three layers, inner layer 1, middle layer 2 and outer layer 3 can be attached to each other by any suitable adhesive for lamination.

The inner layer 1 and the middle layer 2 may be made of materials substantially showing plastic deformation while being folded or bent. The outer layer 3 may substantially show elastic deformation while being folded or bent. The plastic deformation of the inner layer 1 and/or the middle layer 2 compensate(s) the elastic deformation of the outer layer 3, such that the inner liner 10 can be folded and bent according to plastic deformation.

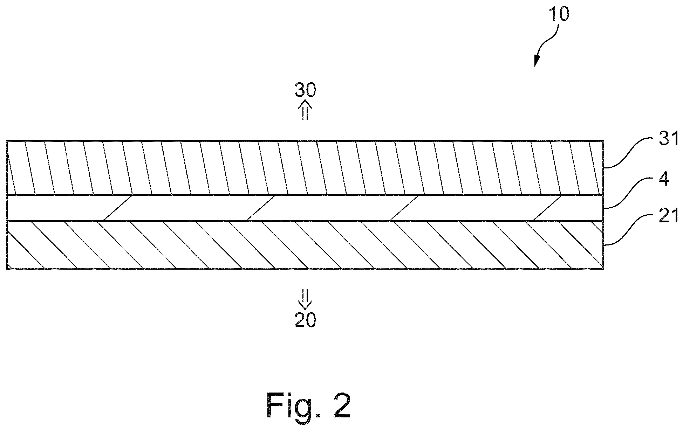

FIG. 2 is a simplified cross-sectional view of an inner liner according to another embodiment not according to the invention. In this embodiment, the inner liner 10 may only comprise two layers 21 and 31. A first layer 21 and a second layer 31 which are directly attached (for example laminated) to each other. The middle layer of the embodiment shown in FIG. 1 may be omitted. A reverse printing 4 may then be provided on the second layer 31 on the side facing the first layer 21. The second layer 31 can then be made of a printable foil and the first layer 21 of paper. The paper may then have more weight (for example 70 g to 90 g per square meter) than in the embodiment having at least three layers in order to compensate the resilient forces of the foil due to elastic deformation of the foil. The first layer 21 may be the inner layer facing the articles 20 and the second layer 31 may be the outer layer facing the body of the package 30. However, in a different embodiment, the first layer 21 may face the body of the package 30 and the second layer 31 may face the articles 20.

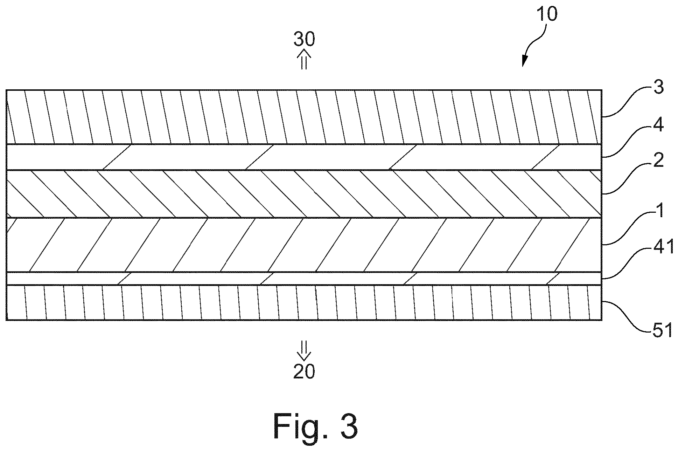

FIG. 3 is a simplified cross-sectional view of an inner liner 10 according to still another embodiment not belonging to the invention. In this embodiment, an additional layer 51 is provided on the inner side of the inner liner 10. This inner layer may also be made of a printable foil (PE, OPP, B-OPP). Another reverse printing 41 may then be provided on the side of the additional layer 51 facing towards another layer (for example middle layer or outer layer or layer 1) of the inner liner 10.

The two layers 1, 2 (third and fourth layer) are now both middle layers. In a package (not shown) the inner layer 51 faces with one side the articles 20. With the opposite side, the inner layer 51 faces the middle layer 1. One side of the middle layer 1 faces the other middle layer 2. The opposite side of the middle layer 2 faces the outer layer 3. The outer layer 3 faces with one side the middle layer 2 while the opposite side faces, for example the body of a (cigarette) package. Reference number 30 generally refers to the outside. According to this embodiment, there can also be a reverse printing 4 which is applied to the outer layer 3. In particular, the reverse printing 4 is applied to the inner side of the outer layer 3, which is the side facing the middle layer 2. The reverse printing 4 is not regarded a separate layer but merely a part of the outer layer 3. For the reverse printing 4, an intaglio printing can be used.

The middle layer 1 can consist of metal, advantageously aluminum (Al) The middle layer 2 can consists of paper and the outer layer 3 can consist of a printable foil. The foil may be polyethylene (PE) or oriented polypropylene (OPP) or B-OPP. It is particularly advantageous to use a foil for the outer layer 3 and the inner layer 51 instead of, for example lacquer. Using a foil simplifies and improves applying the printing on the outer layer. The color of the reverse printing can be substantially different from the color of the articles 20 contained in the inner liner and from the inside of the outer package 30.

The middle layer 1, which is made of metal in this embodiment, can have a weight of 4 g to 12 g per square meter. The middle layer 2, which is made of paper in this embodiment, can have a weight of 20 g to 70 g per square meter. The two middle layers 1, 2 can also be exchanged.

The outer layer 3 and the inner layer 51, which are printable foils, for example made of polyethylene (PE) or oriented polypropylene (OPP) or B-OPP, can have a thickness of 6 µm to 20 µm.

In another embodiment, the middle layer 1 can consist of paper. The middle layer 2 can consist of metal and the outer layer 3 can consist of a printable foil of polyethylene (PE) or oriented polypropylene (OPP) or B-OPP. In this embodiment, the middle layer 2 (metal, e.g. Aluminum) can have weight of 4 g to 12 g per square meter. The inner layer (paper) can then have a weight of 20 g to 70 g per square meter. The outer layer 3 and the inner layer 51 can have a thickness of 6 µm to 20 µm. The four layers, inner layer 51, middle layer 1, middle layer 2 and outer layer 3 can be attached to each other by any suitable adhesive for lamination.

The middle layer 1 and the middle layer 2 may be made of materials substantially showing plastic deformation while being folded or bent. The outer layer 3 and the inner layer 51 may substantially show elastic deformation while being folded or bent. The plastic deformation of the middle layer 1 and/or the middle layer 2 compensate(s) the elastic deformation of the outer layer 3 and the inner layer 51, such that the inner liner 10 can be folded and bent according to plastic deformation.

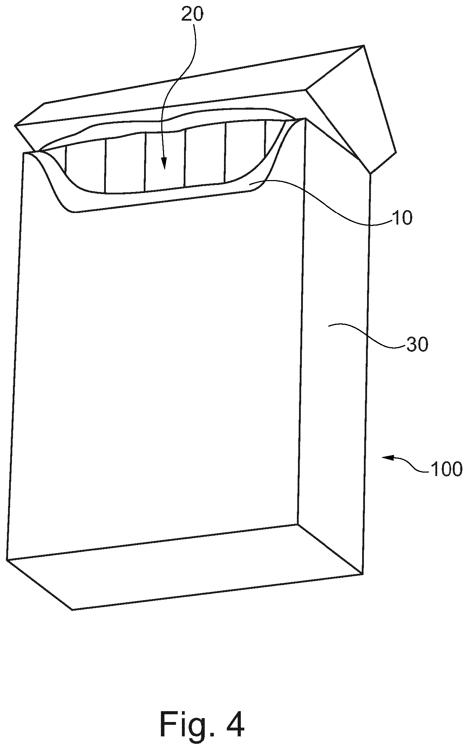

FIG. 4 shows a simplified perspective view on a package 100 according to the aspects of the invention. The package comprises a package body 30, smoking related articles 20 and the inner liner 10 in accordance with aspects and embodiments of the invention. The inner liner 10 is arranged between the articles 20 and the outer body 30 of the package 100. According to the most common use of an inner liner 10, the smoking related articles 20 are initially fully wrapped by the inner liner 10. The inner liner 10 is then either partly removed or unfolded in order to give access to the articles 20. The inner layer 1 of the inner liner 10 faces the articles 20, while the outer layer 3 of the inner liner 10 faces the outer package or is simply directed outside the package 100.

In accordance with the above described embodiments, the outer layer is made of a printable foil having a reverse printing. This provides additional area for advertising, warnings or information.

The package 100 may be a hinged-lid package for cigarettes. Located inside the hinged-lid package can be a collar. The collar front wall can bear with a lower part region against the inner face of a front wall of the package and is connected to the package front wall.

The content 20 of the package, for example a group of cigarettes formed in the shape of a block, is surrounded by the inner liner 10.

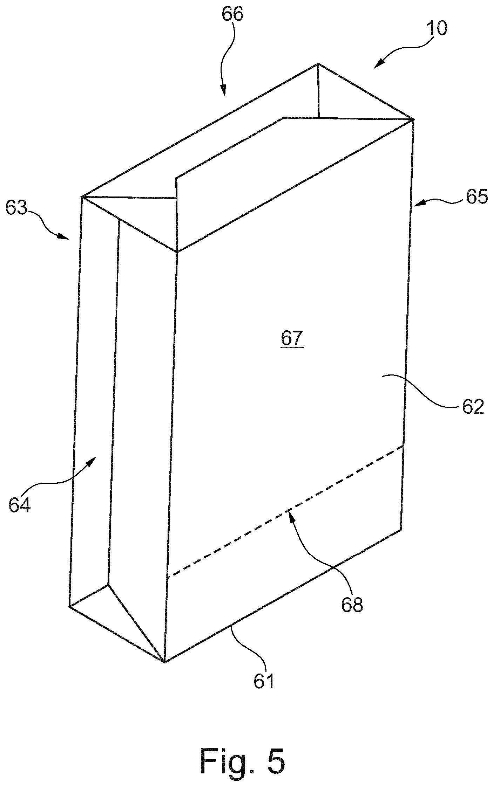

FIG. 5 is a simplified perspective view on a ready-folded inner liner 10 in accordance with the aspects and embodiments of the invention. The inner liner consists of a blank made in accordance with the aspects and embodiments of the invention.

The inner liner surrounds the group of cigarettes (not shown) on all sides. The inner liner 10 is folded in such a way that a closed bottom wall 61, a front wall 62, a corresponding rear wall 63, side walls 64, 65 and a top wall 66 are formed.

The upper part of the front wall 62 of the inner liner is configured as a pull-off flap 67. The pull-off flap 67 can generally be separable from the inner liner 10. The pull-off flap 67 can therefore be limited by a lower transversely directed weakening line 68, for example a perforation line. The weakening line 68 can extend continuously in the region of the front wall 62. When the inner liner 10 is opened, the pull-off flap 67 can be removed.

The entire inner liner 10 or parts of the inner liner 10 can be provided with reverse printings from inside (inner layer or innermost layer) or outside (outer or outermost layer) as described herein. The pull-off flap 67 is advantageously integral with the inner liner 10. This means that the same materials (layers etc.) are advantageously used for the inner liner 10 and the pull-off flap 67. In particular, the pull-off flap 67 can be provided with a reverse printing on the outermost layer of the pull-off flap 67. The reverse printing can extend over the entire front wall 62. The reverse printing can be advertising information, a voucher, a certificate of participation in competitions or the like.

The pull-off flap 67 can be extended. The weakening line 68 can be located below the collar or the upper edge of the package. A larger area of the front wall 62 is then available for the reverse printing. The pull-off flap 67 can also extend directly as far as the bottom wall 61. The weakening line can generally be closer to a bottom wall 61 of the inner liner 10 than to a top wall 66 of the inner liner 10 in a ready-folded configuration of the inner liner 10.

## Claims

1. A package (100) comprising tobacco and/or smoking related articles (20), the package (100) comprising a package body (30) and an inner liner (10), wherein the inner liner (10) is arranged between the inner walls of the body (30) and the tobacco and/or smoking related articles (20); the inner liner (10) consists of a first layer, a second layer and a third layer, wherein the first layer, the second layer and the third layer are optionally laminated by means of an adhesive and wherein the first layer consists of a material that substantially shows plastic deformation and the second layer consists of a material that substantially shows elastic deformation and is at least partially transparent, wherein the first layer is an inner layer (1) and the second layer is an outer layer and the inner liner (10) further comprises a reverse printing on the second layer, and wherein the third layer being a middle layer (2) arranged between the inner layer (1) and the outer layer (3); **characterized in that**
the inner layer (1) consists of metal, the middle layer (2) consists of paper and the outer layer (3) consists of a printable foil, in particular of polyethylene (PE) or oriented polypropylene (OPP) or biaxial oriented polypropylene (B-OPP); or
the inner layer (1) consists of paper, the middle layer (2) consists of metal and the outer layer (3) consists of a printable foil, in particular of polyethylene (PE) or oriented polypropylene (OPP) or biaxial oriented polypropylene (B-OPP).

2. The package (100) according to anyone of the preceding claims, wherein the color of the reverse printing (4) is different from and/or darker than the color of the articles (20) to be contained in the package (100).

3. The package (100) according to anyone of the preceding claims, wherein the reverse printing (4) of the inner liner (10) is applied by intaglio printing.

4. The package (100) according to claim 1, wherein the inner layer (1) of the inner liner (10) has a weight of 4 g to 12 g per square meter.

5. The package (100) according to claim 1, wherein the middle layer (2) of the inner liner (10) has a weight of 4 g to 12 g per square meter.

6. The package (100) according to claim 1, wherein the middle layer (2) of the inner liner (10) has a weight of 20 g to 70 g per square meter.

7. The package (100) according to claim 1, wherein the inner layer (1) of the inner liner (10) has a weight of 20 g to 70 g per square meter.

8. The package (100) according to claim 1, wherein the outer layer (3) of the inner liner (10) has a thickness of 6 µm to 20 µm.

9. A package (100) according to anyone of the previous claims, wherein the inner liner (10) further comprises a removable pull-off flap.

10. A package (100) according to claim 9, wherein the pull-off flap is separable from the inner liner at a weakening line extending transversely of the length of the inner liner and the weakening line is closer to a bottom wall of the inner liner than to a top wall of the inner liner in a ready-folded configuration of the inner liner.

## Patentansprüche

1. Verpackung (100), umfassend tabak- und/oder rauchbezogene Artikel (20), wobei die Verpackung (100) einen Verpackungskörper (30) und eine Innenauskleidung (10) umfasst, wobei die Innenauskleidung (10) zwischen den Innenwänden des Körpers (30) und den tabak- und/oder rauchbezogenen Artikeln (20) angeordnet ist; die Innenauskleidung (10) aus einer ersten Schicht, einer zweiten Schicht und einer dritten Schicht besteht, wobei die erste Schicht, die zweite Schicht und die dritte Schicht optional mittels eines Klebstoffs laminiert sind und wobei die erste Schicht aus einem Material besteht, das im Wesentlichen plastische Verformung zeigt, und die zweite Schicht aus einem Material besteht, das im Wesentlichen elastische Verformung zeigt und mindestens teilweise transparent ist, wobei die erste Schicht eine Innenschicht (1) ist und die zweite Schicht eine Außenschicht ist und die Innenauskleidung (10) ferner einen Widerdruck auf der zweiten Schicht umfasst und wobei die dritte Schicht eine Mittelschicht (2) ist, die zwischen der Innenschicht (1) und der Außenschicht (3) angeordnet ist; **dadurch gekennzeichnet, dass**
die Innenschicht (1) aus Metall besteht, die Mittelschicht (2) aus Papier besteht und die Außenschicht (3) aus einer bedruckbaren Folie besteht, insbesondere aus Polyethylen (PE) oder orientiertem Polypropylen (OPP) oder biaxial orientiertem Polypropylen (B-OPP); oder
die Innenschicht (1) aus Papier besteht, die Mittelschicht (2) aus Metall besteht und die Außenschicht (3) aus einer bedruckbaren Folie besteht, insbesondere aus Polyethylen (PE) oder orientiertem Polypropylen (OPP) oder biaxial orientiertem Polypropylen (B-OPP).

2. Verpackung (100) nach einem der vorhergehenden Ansprüche, wobei die Farbe des Widerdrucks (4) unterschiedlich von der und/oder dunkler als die Farbe der in der Verpackung (100) zu enthaltenden Artikel (20) ist.

3. Verpackung (100) nach einem der vorhergehenden Ansprüche, wobei der Widerdruck (4) der Innenauskleidung (10) durch Tiefdruck aufgebracht wird.

4. Verpackung (100) nach Anspruch 1, wobei die Innenschicht (1) der Innenauskleidung (10) ein Gewicht von 4 g bis 12 g pro Quadratmeter aufweist.

5. Verpackung (100) nach Anspruch 1, wobei die Mittelschicht (2) der Innenauskleidung (10) ein Gewicht von 4 g bis 12 g pro Quadratmeter aufweist.

6. Verpackung (100) nach Anspruch 1, wobei die Mittelschicht (2) der Innenauskleidung (10) ein Gewicht von 20 g bis 70 g pro Quadratmeter aufweist.

7. Verpackung (100) nach Anspruch 1, wobei die Innenschicht (1) der Innenauskleidung (10) ein Gewicht von 20 g bis 70 g pro Quadratmeter aufweist.

8. Verpackung (100) nach Anspruch 1, wobei die Außenschicht (3) der Innenauskleidung (10) eine Dicke von 6 µm bis 20 µm aufweist.

9. Verpackung (100) nach einem der vorherigen Ansprüche, wobei die Innenauskleidung (10) ferner eine entfernbare Abziehklappe umfasst.

10. Verpackung (100) nach Anspruch 9, wobei die Abziehklappe an einer Schwächungslinie, die sich quer zu der Länge der Innenauskleidung erstreckt, von der Innenauskleidung trennbar ist und die Schwächungslinie in einer fertig gefalteten Konfiguration der Innenauskleidung näher an einer unteren Wand der Innenauskleidung als an einer oberen Wand der Innenauskleidung ist.

## Revendications

1. Emballage (100) comprenant des articles de tabac et/ou des articles à fumer (20), l'emballage (100) comprenant un corps d'emballage (30) et un revêtement interne (10), dans lequel le revêtement interne (10) est disposé entre les parois internes du corps (30) et les articles de tabac et/ou les articles à fumer (20) ; le revêtement interne (10) est constitué d'une première couche, d'une deuxième couche et d'une troisième couche, dans lequel la première couche, la deuxième couche et la troisième couche sont éventuellement stratifiées au moyen d'un adhésif et dans lequel la première couche est constituée d'un matériau présentant sensiblement une déformation plastique et la deuxième couche est constituée d'un matériau présentant sensiblement une déformation élastique et étant au moins partiellement transparent, dans lequel la première couche est une couche interne (1) et la deuxième couche est une couche externe et le revêtement interne (10) comprend en outre une impression inverse sur la deuxième couche, et dans lequel la troisième couche est une couche intermédiaire (2) disposée entre la couche interne (1) et la couche externe (3) ; **caractérisé en ce que**
la couche interne (1) est constituée de métal, la couche intermédiaire (2) est constituée de papier et la couche externe (3) est constituée d'une feuille imprimable, notamment de polyéthylène (PE) ou de polypropylène orienté (OPP) ou de polypropylène orienté biaxial (B-OPP) ; ou
la couche interne (1) est constituée de papier, la couche intermédiaire (2) est constituée de métal et la couche externe (3) est constituée d'une feuille imprimable, notamment de polyéthylène (PE) ou de polypropylène orienté (OPP) ou de polypropylène orienté biaxial (B-OPP).

2. Emballage (100) selon l'une des revendications précédentes, dans lequel la couleur de l'impression inverse (4) est différente de et/ou plus foncée que la couleur des articles (20) à contenir dans l'emballage (100).

3. Emballage (100) selon l'une des revendications précédentes, dans lequel l'impression inverse (4) du revêtement interne (10) est réalisée par impression en creux.

4. Emballage (100) selon la revendication 1, dans lequel la couche interne (1) du revêtement interne (10) a un poids de 4 g à 12 g par mètre carré.

5. Emballage (100) selon la revendication 1, dans lequel la couche intermédiaire (2) du revêtement interne (10) a un poids de 4 g à 12 g par mètre carré.

6. Emballage (100) selon la revendication 1, dans lequel la couche intermédiaire (2) du revêtement interne (10) a un poids de 20 g à 70 g par mètre carré.

7. Emballage (100) selon la revendication 1, dans lequel la couche interne (1) du revêtement interne (10) a un poids de 20 g à 70 g par mètre carré.

8. Emballage (100) selon la revendication 1, dans lequel la couche externe (3) du revêtement interne (10) a une épaisseur de 6 µm à 20 µm.

9. Emballage (100) selon l'une des revendications précédentes, dans lequel le revêtement interne (10) comprend en outre une languette d'arrachage amovible.

10. Emballage (100) selon la revendication 9, dans lequel la languette d'arrachage est séparable du revêtement interne au niveau d'une ligne d'affaiblissement s'étendant transversalement à la longueur du revêtement interne et la ligne d'affaiblissement est plus proche d'une paroi inférieure du revêtement interne que d'une paroi supérieure du revêtement interne dans une configuration prête à plier du revêtement interne.
